# EUROPEAN PATENT APPLICATION

(11) **EP 2 778 496 A1**
(43) Date of publication of application: **17.09.2014**
(21) Application number: 14160315.9
(22) Date of filing: 17.03.2014
(51) Int. Cl.: F16L 57/02, F16L 55/07

(54) **Protective sleeve**

(30) Priority: 15.03.2013 US 201361788191 P
(71) Applicant: Burdette III, Cecil Curtiss, Easley, SC 29642 (US); Broadway, David Andrew, Anderson, SC 29621 (US); Grant, Donald Jack, Greenville, SC 29617 (US)
(72) Inventor: Burdette III, Cecil Curtiss, Easley, SC 29642 (US); Broadway, David Andrew, Anderson, SC 29621 (US); Grant, Donald Jack, Greenville, SC 29617 (US)
(74) Representative: Atkinson, Peter Birch

(57) **Abstract**

A burst protection sleeve (100), which may be used to protect against bursting from hydraulic or other pressurized hoses and tubes, is disclosed. The burst protection sleeve (100) comprises an inner sleeve (102), and an outer sleeve (104). The inner sleeve (102) and the outer sleeve (104) are joined and the inner sleeve (102) is disposed within the outer sleeve (104). A method of installing such sleeves and a burst protection system are also disclosed.

## Description

### BACKGROUND OF THE INVENTION

Hoses, such as hydraulic hoses, are subject to pressure in use and may break if worn or the pressure is too high. When a hose breaks, high pressure fluid may erupt from the breakage site and travel at high speed in a continuous stream. This high pressure stream may have a large amount of kinetic energy across a small cross sectional area, which in turn may cause injury to people, equipment, and the environment. In some embodiments, sleeves of the present invention may be used to protect against injury from such breakages.

### SUMMARY OF THE INVENTION

In one embodiment, the invention includes a burst protection sleeve having an inner sleeve and an outer sleeve. In addition, the inner sleeve and the outer sleeve are joined and the inner sleeve is disposed within the outer sleeve.

In another embodiment, the present invention includes a burst protection system. The system includes a burst protection sleeve having an inner sleeve and an outer sleeve. In addition, the inner sleeve and the outer sleeve are joined and the inner sleeve is disposed within the outer sleeve. The system further includes a hose and the burst protection sleeve is positioned to surround at least a portion of the hose.

In still another embodiment, the present invention includes a method for installing a burst protection sleeve. The method includes positioning a burst protection sleeve around a hose, wherein the burst protection sleeve includes an inner sleeve and an outer sleeve. In addition, the inner sleeve and the outer sleeve are joined and the inner sleeve is disposed within the outer sleeve. Furthermore, in this embodiment, the burst protection sleeve is positioned around the hose in a manner to leave a space between the hose and the inner sleeve.

The following description illustrates one or more embodiments of the invention and serves to explain the principles and exemplary embodiment of the invention.

### BRIEF DESCRIPTION OF THE DRAWINGS

These and other features, aspects, and advantages of the present invention are better understood when the following Detailed Description is read with reference to the accompanying drawings, wherein:
Fig. 1 is a partial cutaway perspective view showing an embodiment of a sleeve of the present invention;
Fig. 2 is an end view showing the embodiment of the sleeve of Fig. 1; and
Fig. 3 is an end view showing the embodiment of the sleeve of Fig. 1 installed in an exemplary manner upon a hose.

### DETAILED DESCRIPTION OF EXEMPLARY EMBODIMENTS

Reference will now be made in detail to exemplary embodiments of the present invention, one or more examples of which are illustrated in the accompanying drawings. Each example is provided by way of explanation of the invention and not by limitation of the invention. It will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents.

In one embodiment, the present invention includes a burst protection sleeve. Hoses, including high pressure hoses, pose the risk of injury upon breakage or leaking. By way of example, a pinhole leak may create a fast-moving stream that may be capable of penetrating the human skin, causing serious injury or death. Sleeves of the current invention may be placed around or upon a hose and, upon breakage or leaking of the hose, the kinetic energy of the fluid in the hose is both absorbed by and deflected by the sleeve. In addition, sleeves of the present invention may channel fluid from the hose to a single location, thereby simplifying removal of the leaked fluid. Sleeves of the present invention also provide an abrasion resistance to an underlying hose.

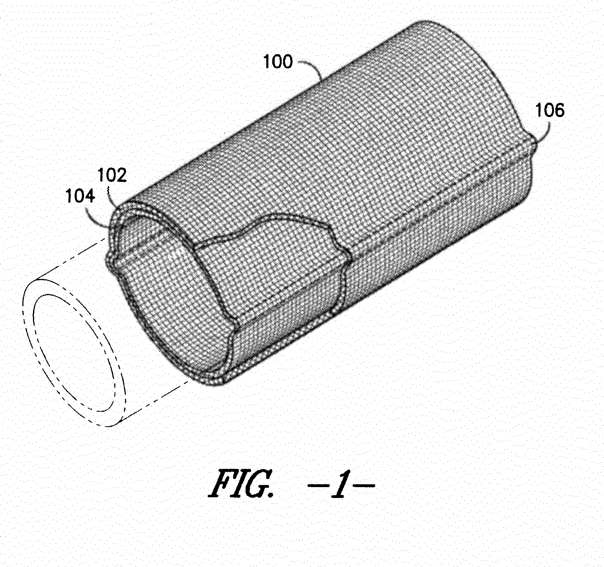

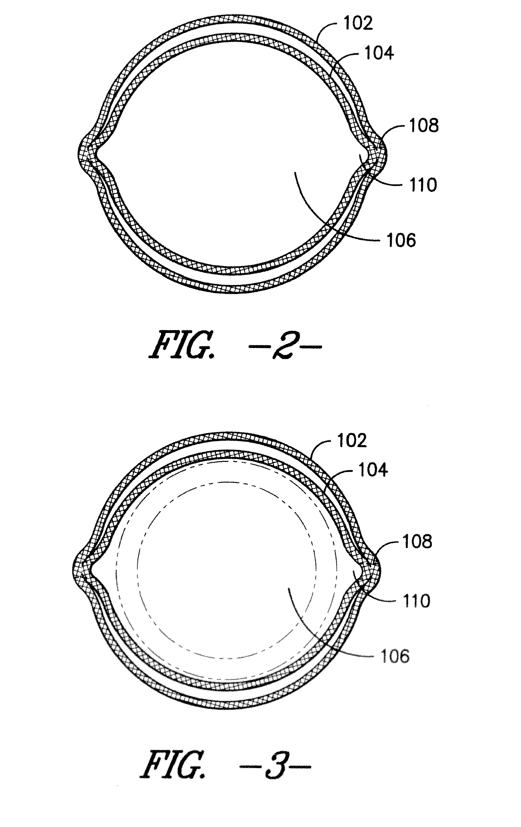

Fig. 1 depicts an exemplary embodiment of a sleeve of the present invention. As shown, sleeve 100 is shown as applied to an underlying hose (shown in broken lines). In the depicted embodiment, sleeve 100 includes inner sleeve 102 (shown by a partial cutaway), outer sleeve 104, and hollow interior 106. Hollow interior 106 is depicted in a generally circular or tubular shape, but other shapes are also within the scope of the present invention. Furthermore, in some embodiments, sleeve 100 may be flexible and capable of configuring to different shaped hoses. In addition, when not in use, sleeve 100 may be collapsible. In some embodiments, as shown in Fig.1, inner sleeve 102 and outer sleeve 104 may be joined, such as by seam 108. Although two seams 108 are shown in the embodiment of Fig. 1, other embodiments may have one seam and still other embodiments may have three seams, four seams, or greater than four or more seams. Furthermore, although only one inner sleeve 102 and one outer sleeve 104 are shown in the depicted embodiment, alternative embodiments may have additional sleeves disposed between and joined with inner sleeve 102 and outer sleeve 104. Furthermore, as shown in Fig. 2, seam 108 may form channel 110 in some embodiments of the present invention.

The sleeves of the present invention may be made from any material or combination of materials suitable for a particular sleeve's intended purpose. In some embodiments, materials for sleeves may be selected to result in an inner sleeve or an outer sleeve with high tensile strength, high thermal resistance, high abrasion resistance, high fatigue resistance, and/or high chemical and heat stability. By way of example, and without limitation, inner sleeves and outer sleeves may be composed of any natural or synthetic material known in the art. In one embodiment, inner sleeves and/or outer sleeves may include fibers such as meta-, para-aramid fibers, para-aramid fibers, meta-aramid fibers, cotton, rayon, Teflon®-coated fibers, shaped fibers, glass fibers, basalt fibers, carbon fibers, high modulus polyethylene fibers, liquid crystal polymer fibers, hollow fibers, nylon, polyesters, polypropylene, polyethylene, polyphenylene sulfide, polyetheretherketone, polyolefins, amide polymers or copolymers, carbon fibers, polyvinyl alcohol fibers, or combinations thereof. In addition, inner sleeves and outer sleeves of the present invention may have the same or different compositions. In some embodiments, inner sleeves and/or outer sleeves may be comprised of materials that are generally impenetrable to fluids within the temperature and pressure ranges of fluids present in the underlying hoses or tubes used in conjunction with a sleeve.

In some embodiments, inner sleeves and outer sleeves of the present invention may be comprised of yarn of any denier that is suitable to withstand the potential pressure exposure of a given application. In some embodiments, sleeves of the present invention may be prepared using warp yarn that is greater than 2700 denier. In some embodiments, warp yarn having about 2700 denier may be used. Some embodiments of the present invention may comprise warp yarn in the range of about 840 denier to about 2700 denier. In still other embodiments, sleeves of the present invention may comprise warp yarns in the range of about 2700 denier to about 5000 denier. By way of further example, some inner sleeves of the present invention comprise warp yarn of at least about 2000 denier, and some outer sleeves of the present invention comprise warp yarn of at least about 2500 denier. In some embodiments, yarns having less than 3000 denier may be used. In some embodiments, fill yarns may be used within the range of about 500 to about 1000 denier, including each intermittent value therein.

In some embodiments, inner sleeves and outer sleeves of the present invention may comprise material that is woven, such as woven yarn, fibers, or other material suitable for the intended purpose of the sleeve. The term "woven", as used herein, means interlacing individual fibers in a regular order. Any method of weaving known in the art may be utilized in connection with the present invention. Similarly, any weave pattern known in the art may be utilized in the webbing, including, but not limited to, a plain weave, a twill weave, a satin weave, a tabby weave, a taffeta weave, a matt weave, a basket weave, a rib weave, computer-generated interlacings, and combinations thereof.

In addition, the fibers employed may have any configuration known in the art. For example, the fibers may be configured as circular, ovular, elliptical, or flat. In addition, in some embodiments, some or all material used to form an inner sleeve and/or an outer sleeve of the present invention may be twisted (i.e., the fiber is twisted about its central axis) prior to being woven into an inner sleeve or an outer sleeve.

In one embodiment, an inner sleeve may have a tight plain weave, such as in the range of about 4.75 picks per inch to about 50 picks per inch, including each intermittent value therein. In some embodiments, an inner sleeve may have a pick count of at least about 17.5 picks per inch. An outer sleeve may have a plain weave of about 2.5 to about 7.5 picks per inch, including each intermittent value therein. In some embodiments, an outer sleeve may have a pick count of at least about 12.5 picks per inch. In some embodiments, an inner sleeve may have material woven using a plain weave and an outer sleeve may have material woven using either a twill weave or a plain weave. For reference, a plain weave may also be referred to as a basket weave.

By way of example, in one exemplary embodiment of the present invention, a sleeve may have an inner woven tube comprised of twisted 1000 denier 2-ply polyester warp yarn and an outer woven sleeve comprised of 2700 denier bulk nylon warp with a pick count of 22.5 picks per inch, wherein 840 denier nylon is employed as fill yarn (also called weft). In some embodiments, suitable yarn may be woven to result in sleeves that may withstand a burst resulting in at least 20,000 pounds of pressure against the sleeve.

Any suitable process may be employed to prepare embodiments of the present invention. In some embodiments, an inner sleeve and an outer sleeve may be joined together during a weaving process by using a latching needle to knit the fibers of the inner tube and the fibers of the outer tube together at one or more edges, such as to form a seam such as seam 108 shown in Fig. 2.

Embodiments of sleeves of the present invention may be made using materials that provide adequate strength to avoid bursting from a leak or breakage of the underlying hose or tube as well as providing for abrasion resistance properties to the sleeves. For certain embodiments, sleeves may also be comprised of materials that are resistant to degradation from fluids present in the hoses or tubes with which the sleeves are used.

Sleeves of the present invention may optionally be secured to hoses or tubes using any suitable means, such as plastic ties, metal clamps, and the like. In some embodiments, such securing mechanisms may be configured or attached in a manner to enable any fluid to escape from the sleeve upon any release from an underlying hose or tube. In some embodiments, a sleeve may be used to house a single hose or tube. In other embodiments, a sleeve may be used to house a plurality of hoses or tubes.

In some embodiments, a space or gap may be present between an inner sleeve of the present invention and an underlying hose or tube. The space may not be present or apparent when the sleeve is collapsed around a hose, but the space is present and exists such that it may be filled with fluid upon any leakage from the underlying hose. In this manner, sleeves of the present invention may be sized or applied to hoses in a manner such that a space remains between the inner sleeve and/or the outer sleeve and a sleeved hose, i.e., providing a sufficiently loose fit between the inner sleeve and the outer sleeve. In some embodiments, such a space may be at least about 0.25, 0.50, 0.75, or 1.0 inch, including each intermittent value therein. In some specific embodiments, the space between the inner sleeve and the underlying hose is at least 0.50 inches. In addition, channels may be present within sleeves of the present invention, such as channel 110, to permit fluid escaping from a hose within the sleeve to flow.

As indicated above, sleeves of the present invention may be used to deflect fluid upon release from an underlying hose or tube and may also channel such fluid in the direction of the sleeve. By way of example, upon a leak in an underlying tube, a sleeve of the present invention may block the escaping fluid and redirect that fluid in a direction parallel to the length of the sleeve. Such fluid may travel in any space between the inner sleeve and the underlying tube, between any space between the inner sleeve and the outer sleeve if the fluid penetrates through the inner sleeve, and/or along channel 108 formed by any seams in a sleeve. In some embodiments, an inner sleeve may be provided with a rib or a spacer. Such a rib may provide a space, or channel, between an underlying hose or tube and an inner sleeve such that any fluid escaping from the hose may be redirected to flow parallel with the length of the inner sleeve in such space formed by a rib. In addition, a seam may be configured in some embodiments to provide a space between an underlying hose and the inner sleeve. In still other embodiments, an inner sleeve having a sufficiently larger inner diameter as compared with the outer diameter of an underlying hose may be employed to ensure an adequate space or gap between the hose and inner sleeve. In some embodiments, the space or gap may be present around the entire underlying hose. In some embodiments, although an inner sleeve may rest against a hose during normal operation, the inner sleeve is sufficiently loose around the hose such that the sleeve may be displaced to form a space or gap upon a burst or leak in the underlying hose.

In some embodiments, sleeves of the present invention may be configured to provide an indication of wear in the sleeve. By way of example, an outer sleeve and an inner sleeve of a particular sleeve may have different or visually-contrasting colors. In one embodiment, an outer sleeve may be black or another dark color and an inner sleeve may be a bright color, such as bright yellow. Upon wear of the outer sleeve, the bright color of the inner sleeve will be visible, thereby indicating to a user that the sleeve is damaged, thin, ripped, or torn. Such indicators enable a user to change the sleeve before further damage is incurred and before a sleeve becomes unsuitable for use.

### Sleeve Performance Testing

Performance of an embodiment of a sleeve of the present invention was tested using the following procedures. The tested sleeve included an outer sleeve prepared from 2700-denier nylon yarn and an inner sleeve with twisted 1000-denier polyester yarn, both having 2 x 840-denier nylon fill yarn woven at 90 picks/inch. The loom used in the weaving process inserted fill yarn with a needle from one side of the machine and, when the needle reached the other side of the machine, the filling yarn was grabbed and knitted into the other side of the webbing. This technique actually weaves 2 filling ends for every pick woven.

For the testing, the sleeve, having the additional parameters identified in Table 1 for each individual test, was clamped at each end upon a hose measuring two feet in length and having the parameters identified in Table 1 corresponding to the particular test. An end of each hose was plugged and the other end was connected to an air-over-water intensifier. Air was initially bled from the hose and then the pressure inside the hose was increased until the hose failed. Testing was conducted at an ambient temperature of approximately 70 °F and, after hose failure, the maximum pressure recorded by the process meter was recalled and recorded. Observations concerning the performance of the sleeve were also recorded. The results are set forth in Table 1, wherein size indicates the inner diameter of the hose in units of 1/16 inches, "OD" indicates outer diameter, "ID" represents inner diameter, "MSHA" indicates Mine Safety Health Administration standards, and references beginning with "100R" indicate standards of SAE International.

Based upon the test results, it is believed that sleeve embodiments providing a space or gap between the outer surface of a sleeved hose and the inner face of an inner sleeve may provide advantageous performance in some embodiments. In this regard, some embodiments of the present invention provide a space or gap of at least 0.5 inches between an inner sleeve and a hose.

These and other modifications and variations to the present invention may be practiced by those of ordinary skill in the art without departing from the spirit and scope of the present invention, which is more particularly set forth in the appended claims. In addition, it should be understood that aspects of the various embodiments may be interchanged in whole or in part. Furthermore, those of ordinary skill in the art will appreciate that the foregoing description is by way of example only, and it is not intended to limit the invention as further described in such appended claims. Therefore, the spirit and scope of the appended claims should not be limited to the exemplary description of the versions contained herein.

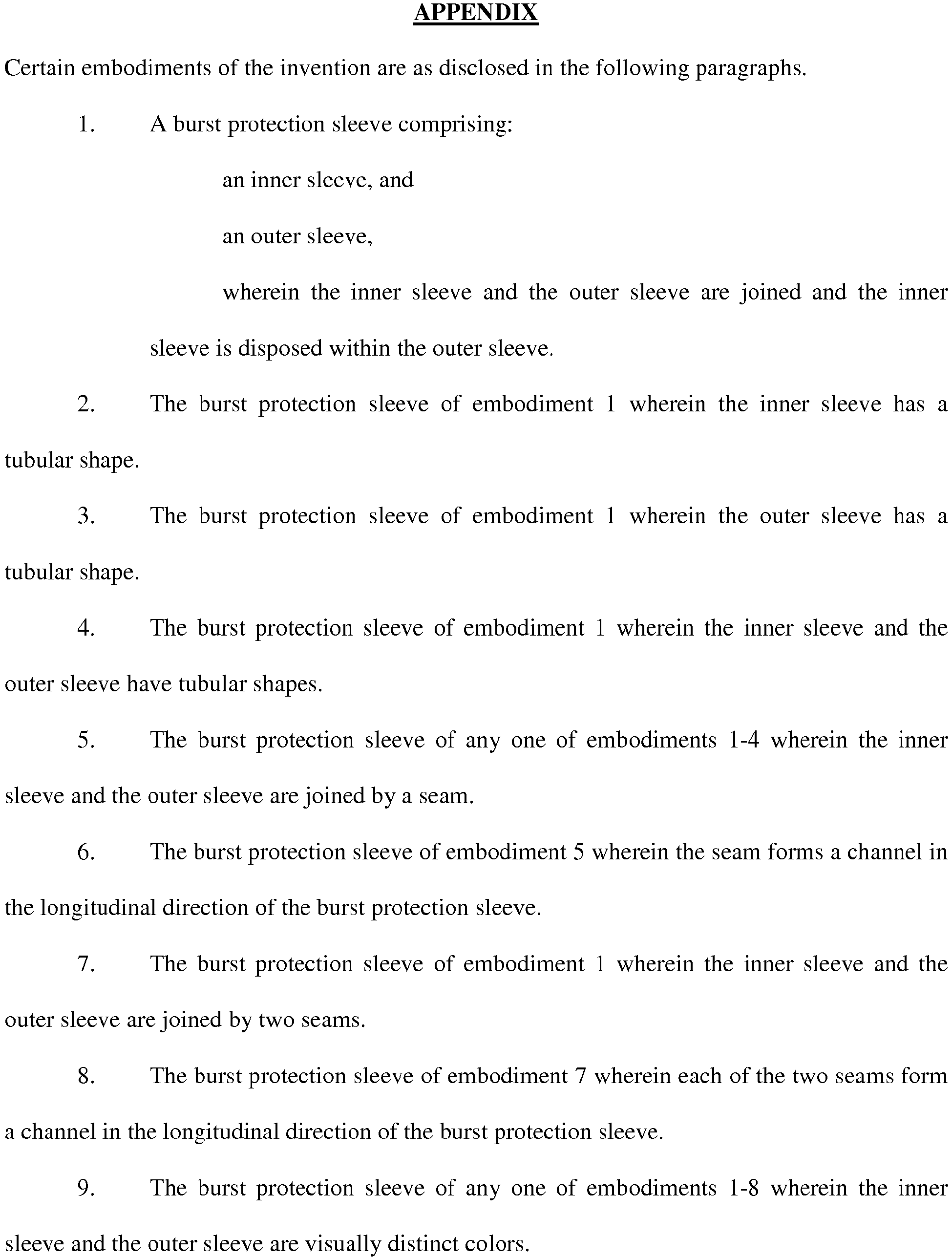

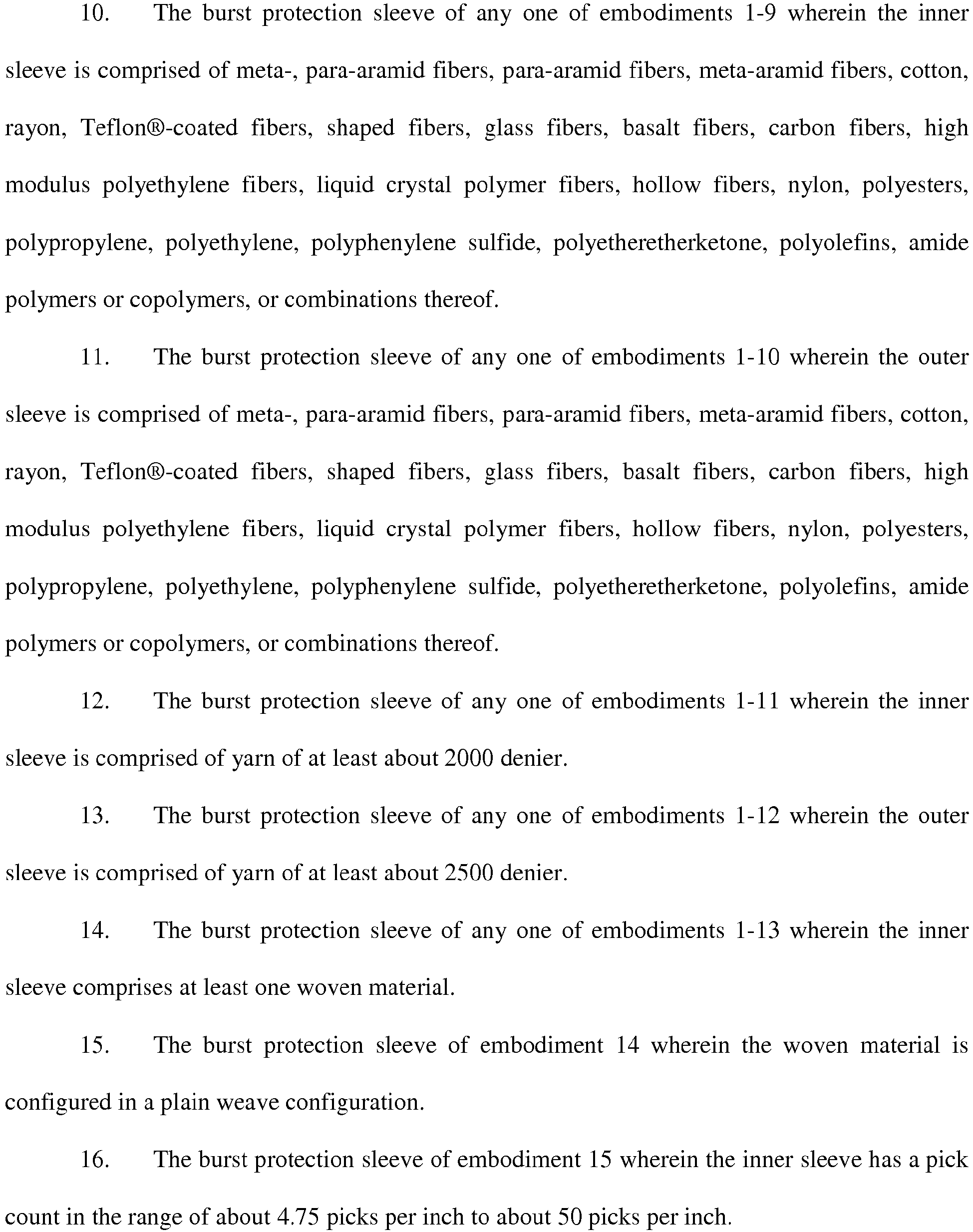

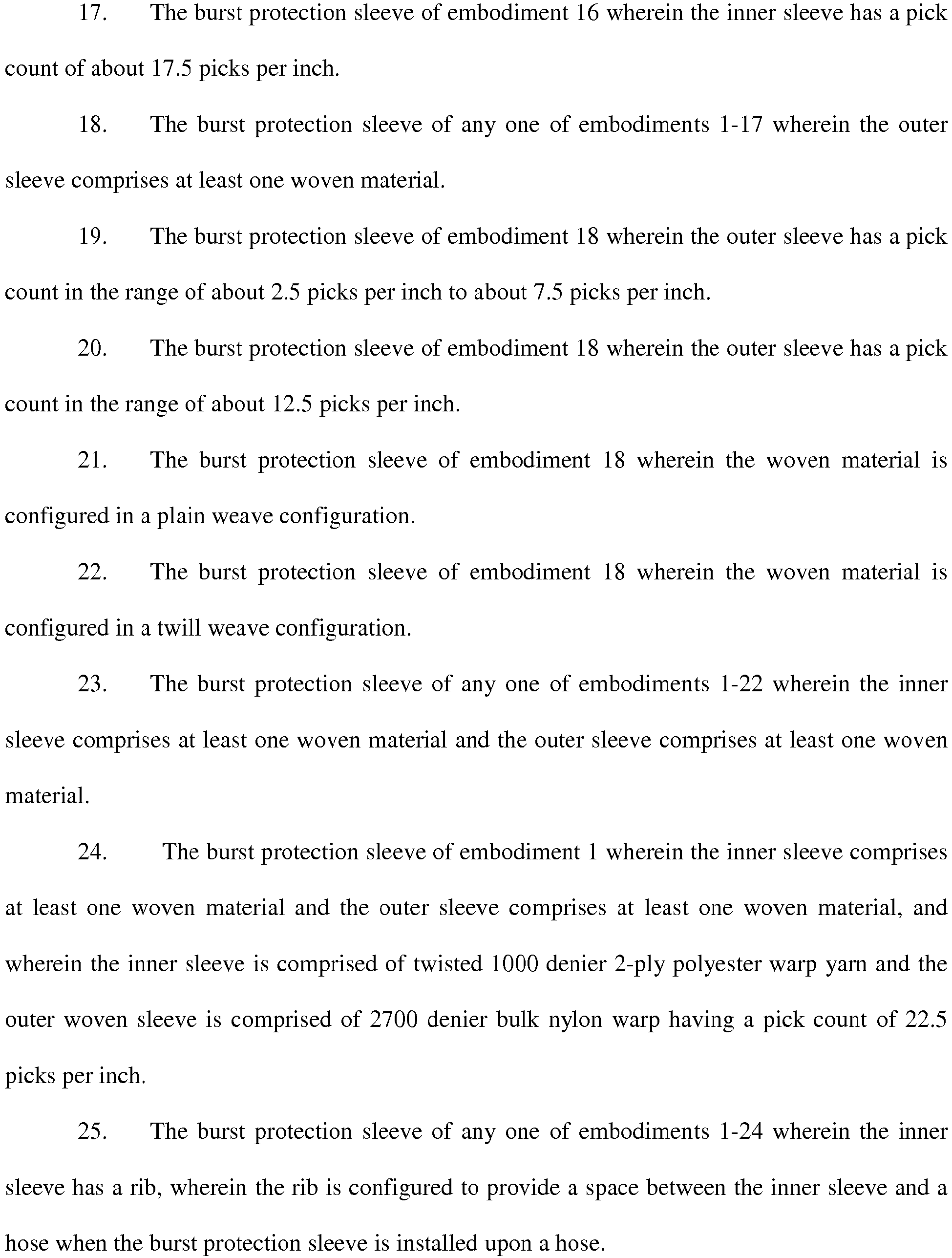

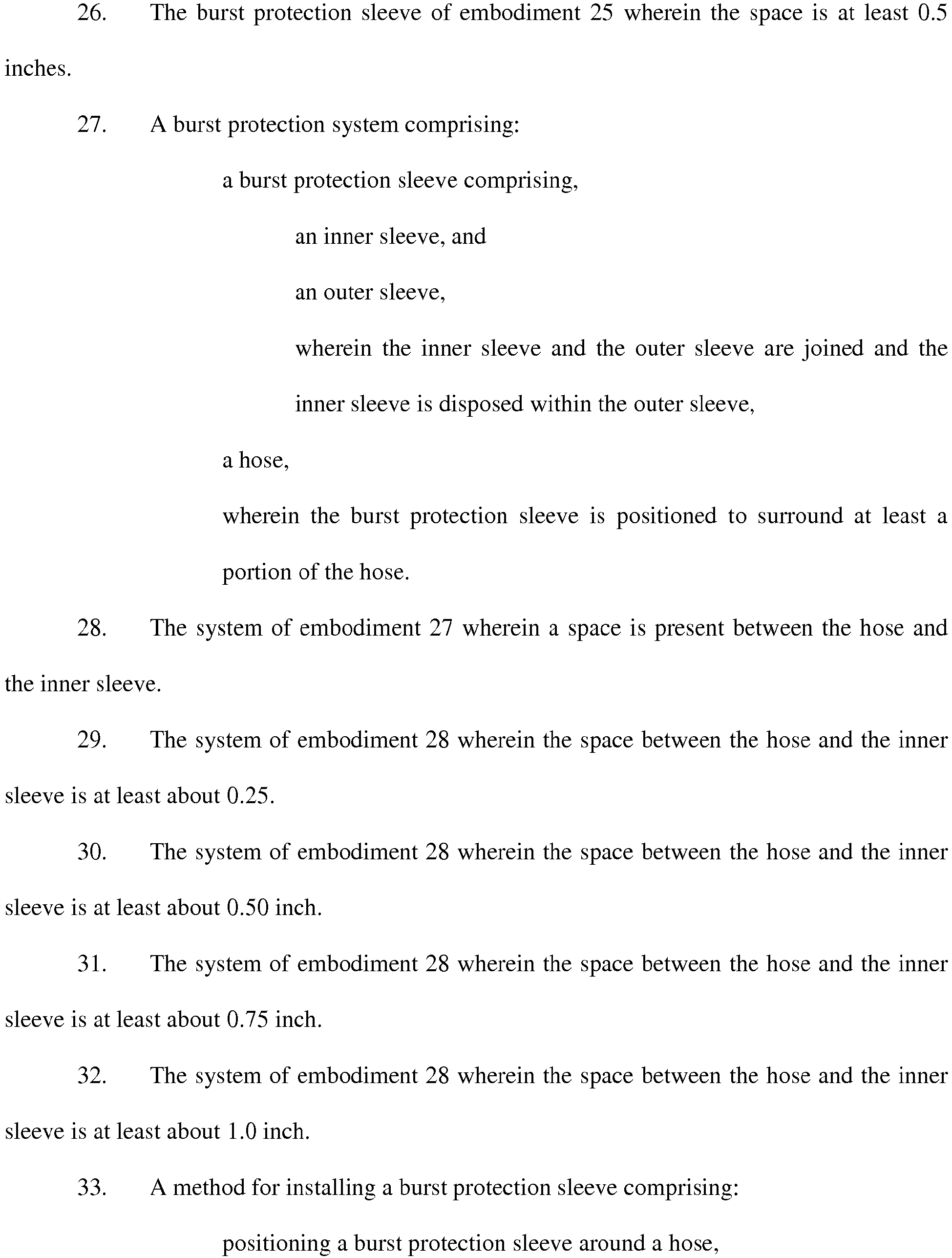

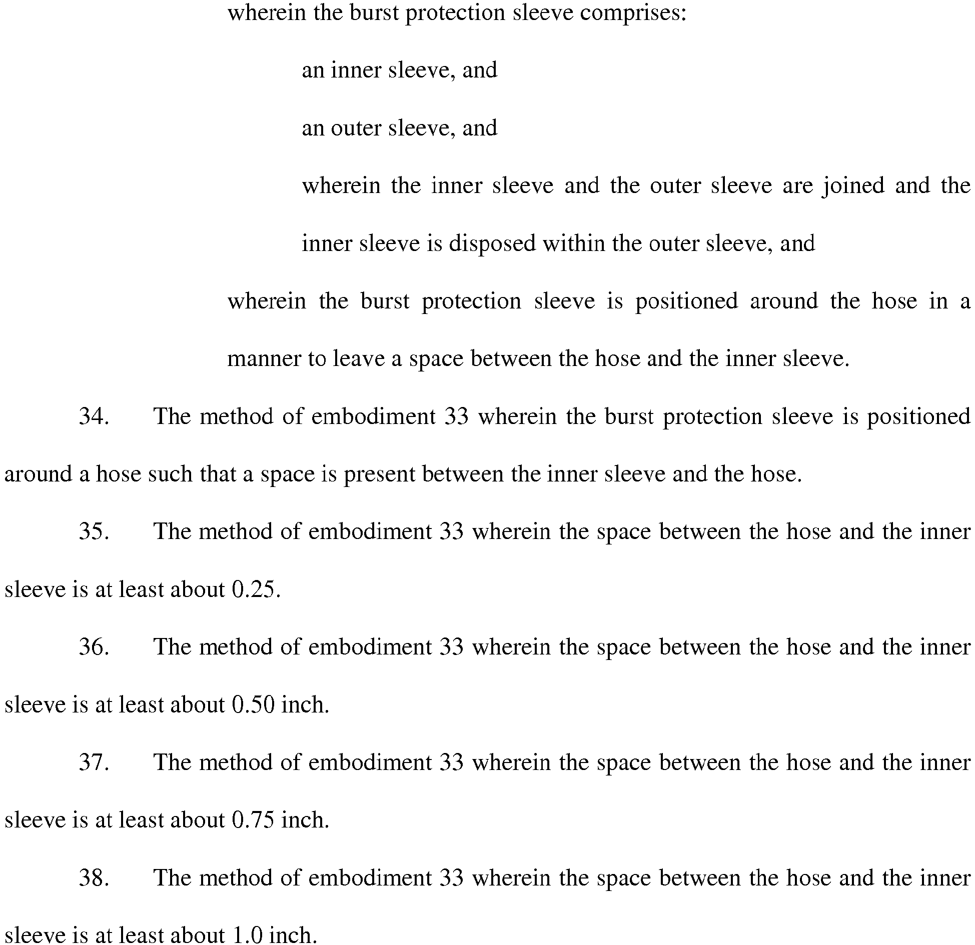

## Claims

1. A burst protection sleeve comprising:
an inner sleeve, and
an outer sleeve,
wherein the inner sleeve and the outer sleeve are joined and the inner sleeve is disposed within the outer sleeve, said inner sleeve and said outer sleeve preferably being of visually distinct colors.

2. The burst protection sleeve of claim 1 wherein the inner sleeve and/or the outer sleeve has a tubular shape.

3. The burst protection sleeve of claim 1 or 2 wherein the inner sleeve and the outer sleeve are joined by a seam.

4. The burst protection sleeve of claim 3 wherein the seam forms a channel in the longitudinal direction of the burst protection sleeve.

5. The burst protection sleeve of claim 1 wherein the inner sleeve and the outer sleeve are joined by two seams.

6. The burst protection sleeve of claim 5 wherein each of the two seams form a channel in the longitudinal direction of the burst protection sleeve.

7. The burst protection sleeve of any one of claims 1 to 6 wherein the inner sleeve and/or the outer sleeve is comprised of meta-, para-aramid fibers, para-aramid fibers, meta-aramid fibers, cotton, rayon, Teflon®-coated fibers, shaped fibers, glass fibers, basalt fibers, carbon fibers, high modulus polyethylene fibers, liquid crystal polymer fibers, hollow fibers, nylon, polyesters, polypropylene, polyethylene, polyphenylene sulfide, polyetheretherketone, polyolefins, amide polymers or copolymers, or combinations thereof.

8. The burst protection sleeve of any one of claims 1 to 8 wherein the inner sleeve is comprised of yarn of at least about 2000 denier and/or the outer sleeve is comprised of yarn of at least about 2500 denier.

9. The burst protection sleeve of any one of claims 1 to 8 wherein the inner sleeve comprises at least one woven material.

10. The burst protection sleeve of claim 9 wherein the inner sleeve has a pick count in the range of about 4.75 picks per inch to about 50 picks per inch, preferably about 17.5 picks per inch.

11. The burst protection sleeve of any one of claims 1 to 10 wherein the outer sleeve comprises at least one woven material.

12. The burst protection sleeve of claim 11 wherein the outer sleeve has a pick count in the range of about 2.5 picks per inch to about 7.5 picks per inch, preferably about 12.5 picks per inch.

13. The burst protection sleeve of any one of claims 1 to 12 wherein the inner sleeve comprises at least one woven material and the outer sleeve comprises at least one woven material, the inner sleeve preferably being comprised of twisted 1000 denier 2-ply polyester warp yarn and the outer woven sleeve preferably being comprised of 2700 denier bulk nylon warp having a pick count of 22.5 picks per inch.

14. The burst protection sleeve of any one of claims 1 to 14 wherein the inner sleeve has a rib, wherein the rib is configured to provide a space between the inner sleeve and a hose when the burst protection sleeve is installed upon a hose, said space preferably being at least 0.5 inches.

15. A burst protection system comprising:
a burst protection sleeve comprising,
an inner sleeve, and
an outer sleeve,
wherein the inner sleeve and the outer sleeve are joined and the inner sleeve is disposed within the outer sleeve,
a hose,
wherein the burst protection sleeve is positioned to surround at least a portion of the hose.

16. The system of claim 15 wherein a space is present between the hose and the inner sleeve.

17. The system of claim 16 where the space is at least about 0.25, more preferably at least about 0.50 inch, even more preferably at least about 0.75 inch, and most preferably at least about 1.0 inch.

18. A method for installing a burst protection sleeve comprising positioning the burst protection sleeve of any of claims 1 to 14 around a hose in a manner to leave a space between the hose and the inner sleeve.

19. The method of claim 18 wherein the space is at least about 0.25, more preferably at least about 0.50 inch, even more preferably at least about 0.75 inch, and most preferably at least about 1.0 inch.
